(19) Europäisches Patentamt

European Patent Office

Office européen des brevets

(11) **EP 3 671 592 A1**

(12) **EUROPEAN PATENT APPLICATION**

(43) Date of publication:
**24.06.2020 Bulletin 2020/26**

(21) Application number: **19215715.4**

(22) Date of filing: **12.12.2019**

(51) Int Cl.:
*G06Q 10/06* (2012.01)   *G06Q 50/08* (2012.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.12.2018 KR 20180165468**
**14.03.2019 KR 20190029373**

(71) Applicant: **Kepco Engineering & Construction Company, Inc.**
**Gimcheon-si**
**Gyeongsangbuk-do**
**39660 (KR)**

(72) Inventors:
• BAE, Yoo Kyoung
  39660 Gyeongsangbuk-do (KR)
• KIM, Yong Soo
  39660 Gyeongsangbuk-do (KR)
• LEE, Jun Hee
  39660 Gyeongsangbuk-do (KR)

(74) Representative: **J A Kemp LLP**
**14 South Square**
**Gray's Inn**
**London WC1R 5JJ (GB)**

(54) **PROGRESS RATE ROLL-UP SYSTEM FROM LOWER LEVEL TO UPPER LEVEL FOR ENGINEERING CONTROL SYSTEM OF POWER PLANT CONSTRUCTION PROJECT**

(57) Provided is a progress rate roll-up system for calculating a Level 3 progress rate based on a Level 4 progress rate. The progress rate roll-up system includes a Level association unit, a mapping association unit, and a Level 3 association unit. The progress rate roll-up system further includes at least one of a BEME database (DB), an EWS DB, an EIPS DB, a mapping DB, a EIPS_No_Group_MH DB, a CPVAL DB, and a EIPS_No_MH DB. Accordingly, because not only the Level 4 progress rate but also the Level 3 progress rate may be calculated, more accurate analysis data may be provided to complete a project within an allocated budget and a given construction period.

FIG. 1

**Description**

This application claims the benefit of Korean Patent Application No. 10-2018-0165468, filed on December 19, 2018, in the Korean Intellectual Property Office and Korean Patent Application No. 10-2019-0029373, filed on March 14, 2019, in the Korean Intellectual Property Office, the disclosures of which are incorporated herein in their entirety by reference.

One or more embodiments relate to a system for calculating a progress rate to measure the performance and progress of a project in a nuclear/thermal power plant construction project, and more particularly, to a progress rate roll-up system from a Level 4 progress rate to a Level 3 progress rate.

Nuclear/thermal power plant construction projects have long project periods and extensive design deliverables. In order to successfully achieve a construction project target within an allocated budget range and a given construction period, it is important to systematically control a progress rate by managing a baseline engineering man hour estimate (BEME) input for issuing a design result, a per-control-point work achievement level (CPVAL) of the design result, a planned issue date of the design result, and an actual issue date.

In general, management levels of schedules are classified according to details of management targets. For example, a Level 4 progress rate such as an engineering working schedule (EWS) is calculated based on a design result, whereas a Level 3 progress rate such as an engineering integrated project schedule (EIPS) is calculated based on a work type control number (EIPS_No).

The present disclosure provides a method of calculating a progress rate to provide more accurate analysis data to complete a construction project within an allocated budget range and a given construction period. The present disclosure may provide a method of calculating a lower level (e.g., Level 4) engineering working schedule (EWS) based progress rate and an upper level (e.g., Level 3) engineering integrated project schedule (EIPS) based progress rate together by associating progress rates in different levels. Particularly, the present disclosure may provide a progress rate roll-up system including an association logic and a database (DB) to link a Level 3 progress rate and a Level 4 progress rate with each other.

Meanwhile, it may require progress rates based on different levels depending on construction projects and/or project owners. When a level standard for calculating a progress rate is changed, a progress rate calculation system for the changed level standard should be reconstructed. For example, a domestic nuclear power plant construction project may require a progress rate based on Level 4, whereas a foreign nuclear power plant construction project may require a progress rate based on Level 3. In this case, it may be necessary to separately produce a system for calculating a progress rate based on Level 3 for the foreign nuclear power plant construction project. In order to solve this limitation, the present disclosure may provide a progress rate roll-up system from a Level 4 progress rate to a Level 3 progress rate in response to the case of requesting a report on progress rates based on different levels depending on the demands of domestic/foreign project owners.

According to one or more embodiments, a progress rate roll-up system includes: a baseline engineering man hour estimate (BEME) database (DB) for calculating a Level 4 engineering working schedule (EWS) based progress rate; an engineering working schedule (EWS) DB for managing a list and schedule of a design result; and a Level 4 association unit matching a design work unit account (ECOA) of the baseline engineering man hour estimate (BEME) DB and a design work unit account (ECOA) of the engineering working schedule (EWS) DB.

The progress rate roll-up system may further include a mapping association unit generating a work type control number group (EIPS_No_Group) and managing a mapping DB storing a design work unit account quantity (ECOA_qty) and a work type control number group quantity (EIPS_No_Group_qty) for each work type control number group (EIPS_No_Group) in order to associate a work type control number (EIPS_No), which is a control item of a Level 3 engineering integrated project schedule (EIPS), and an engineering working schedule control number (EWS_No), which is a control item of an engineering working schedule (EWS), with each other.

The progress rate roll-up system may further include a Level 3 association unit calculating a work type control number group weight value (EIPS_No_Group_WV) based on the design work unit account quantity (ECOA_qty) and the work type control number group quantity (EIPS_No_Group_qty), calculating a work type control number weight value (EIPS_No_WV) based on a work achievement level (CPVAL, %Complete Value) for each control point (CP) of the design result distinguishing the work type control number (EIPS_No), and calculating a progress rate for each work type control number (EIPS_No) in association with the engineering working schedule (EWS) DB.

According to one or more embodiments, a progress rate roll-up system includes: a baseline engineering man hour estimate (BEME) database (DB) storing a design work unit account number (ECOA_No) and a design work unit account weight value (ECOA_WV); an engineering working schedule (EWS) DB storing an engineering working schedule control number (EWS_No) and a design work unit account number (ECOA_No); and a Level 4 association unit managing the baseline engineering man hour estimate (BEME) DB and the engineering working schedule (EWS) DB and associating the baseline engineering man hour estimate (BEME) DB and the engineering working schedule (EWS) DB with each other based on the design work unit account number (ECOA_No).

The progress rate roll-up system may further include an engineering integrated project schedule (EIPS) DB storing a work type control number (EIPS_No); and a mapping association unit generating a work type control number group (EIPS_No_Group) corresponding to the engineering working schedule control number (EWS_No) based on the work type control number (EIPS_No) of the engineering integrated project schedule (EIPS) DB and storing the same in the engineering working schedule (EWS) DB.

The progress rate roll-up system may further include a mapping DB storing a design work unit account quantity (ECOA_qty) and a work type control number group quantity (EIPS_No_Group_qty) corresponding to the work type control number group (EIPS_No_Group). The mapping association unit may calculate the design work unit account quantity (ECOA_qty) based on the number of engineering working schedule control numbers (EWS_No) of the same design work unit account number (ECOA_No), store the same in the mapping DB, calculate the work type control number group quantity (EIPS_No_Group_qty) based on the number of engineering working schedule control numbers (EWS_No) of the same work type control number group (EIPS_No_Group), and store the same in the mapping DB.

The progress rate roll-up system may further include: a work type control number group man hour (EIPS_No_Group_MH) DB storing a work type control number group weight value (EIPS_No_Group_WV) corresponding to the work type control number group (EIPS_No_Group); and a Level 3 association unit calculating the work type control number group weight value (EIPS_No_Group_WV) based on the design work unit account weight value (ECOA_WV), the design work unit account quantity (ECOA_qty), and the work type control number group quantity (EIPS_No_Group_qty) and storing the same in the work type control number group man hour (EIPS_No_Group_MH) DB.

The work type control number group weight value (EIPS_No_Group_WV) may be calculated as a value obtained by dividing the product of the design work unit account weight value (ECOA_WV) and the work type control number group quantity (EIPS_No_Group_qty) by the design work unit account quantity (ECOA_qty).

The progress rate roll-up system may further include a work achievement level (CPVAL) DB storing a functional breakdown structure (FBS) and a per-control-point (CP) work achievement level (CPVAL) corresponding to the functional breakdown structure (FBS).

The per-control-point work achievement level CPVAL may include at least one of an approval point weight value (PI CPVAL), a construction point weight value (CI CPVAL), a final point weight value (FI CPVAL), and a completion point weight value (AB CPVAL).

The progress rate roll-up system may further include a work type control number man hour (EIPS_No_MH) DB storing the work type control number (EIPS_No), the work type control number group (EIPS_No_Group), the functional breakdown structure (FBS), the per-control-point (CP) work achievement level (CPVAL), and a work type control number weight value (EIPS_No_WV). The Level 3 association unit may calculate a work type control number weight value (EIPS_No_WV) based on the work type control number group weight value (EIPS_No_Group_WV) and the per-control-point (CP) work achievement level (CPVAL).

The Level 3 association unit may calculate a Level 3 progress rate by determining whether the work type control number weight value (EIPS_No_WV) is achieved based on a list and schedule of a design result stored in the engineering working schedule (EWS) DB.

The above and other aspects, features, and advantages of certain embodiments of the disclosure will be more apparent from the following description taken in conjunction with the accompanying drawings, in which:

FIG. 1 illustrates a general schedule system;

FIGS. 2A to 2C illustrate examples of information needed to calculate a Level 4-based design progress rate;

FIG. 3 illustrates an example of calculating a Level 3 progress rate;

FIG. 4 is a diagram for describing an association concept between a Level 4 progress rate and a Level 3 progress rate according to the present disclosure;

FIG. 5 schematically illustrates a block diagram of a progress rate roll-up system according to the present disclosure;

FIGS. 6A to 6G illustrates examples of a baseline engineering man hour estimate (BEME) database (DB), an engineering working schedule (EWS) DB, a mapping (Mapping) DB, a work achievement level (CPVAL) DB, an engineering integrated project schedule (EIPS) DB, a work type control number group man hour (EIPS_No_Group_MH) DB, and a work type control number man hour (EIPS_No_MH) DB in order to describe an operation of a progress rate roll-up system according to the present disclosure;

FIGS. 7A to 7D illustrate examples of tables in which information needed to perform an operation of a progress rate roll-up system according to the present disclosure is recorded; and

FIGS. 8A and 8B respectively illustrate examples of a Level 4 progress rate report and a Level 3 progress rate report.

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description.

As used herein, the term "and/or" includes any and all combinations of one or more of the associated listed items. Expressions such as "at least one of," when preceding a list of elements, modify the entire list of elements and do not modify the individual elements of the list.

The terminology used herein is for the purpose of describing particular embodiments only and is not intended to limit the present disclosure. As used herein, the singular forms "a", "an", and "the" are intended to include the plural forms as well, unless the context clearly indicates otherwise. It will be understood that terms such as "comprise", "include", and "have", when used herein, specify the presence of stated features, integers, steps, operations, elements, components, or combinations thereof, but do not preclude the presence or addition of one or more other features, integers, steps, operations, elements, components, or combinations thereof. Although terms such as "first" and "second" may be used herein to describe various elements or components, these elements or components should not be limited by these terms. These terms are only used to distinguish one element or component from another element or component.

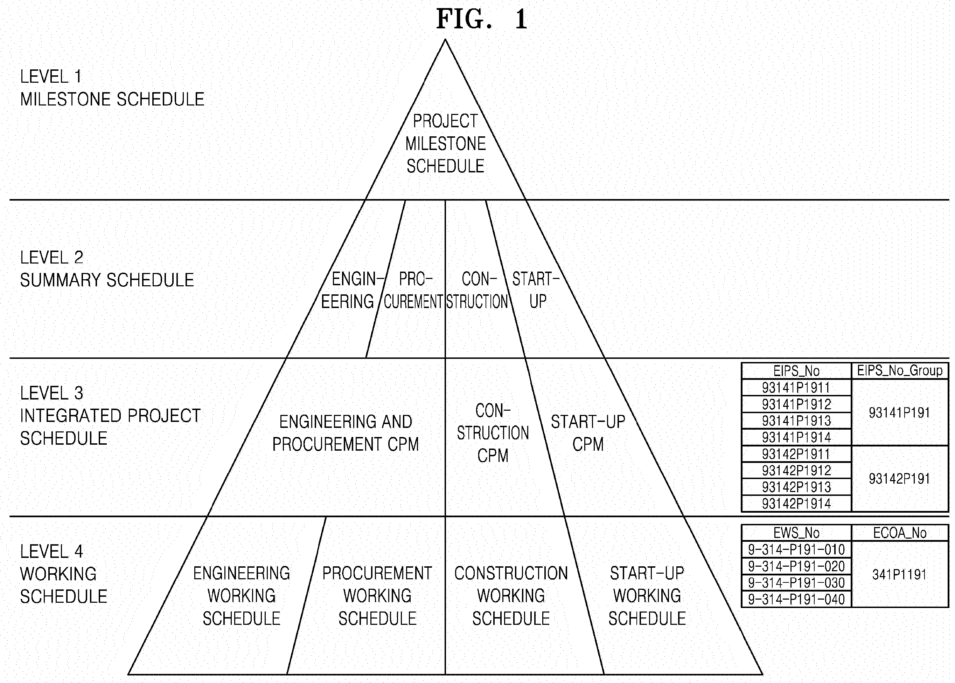

FIG. 1 illustrates a general schedule system.

In general, the schedule system of a construction project may include four levels as illustrated in FIG. 1. The schedule system may include a Level 1 milestone schedule, a Level 2 summary schedule, a Level 3 integrated project schedule (IPS), and a Level 4 detailed working schedule. The Level 1 milestone schedule may be the highest-level schedule and may represent a main schedule and a main project plan for a project milestone. The project milestone may be divided into, for example, a design field, a procurement field, a construction field, and a start-up field. The Level 2 summary schedule may represent a progress rate of each field.

The Level 3 integrated project schedule (IPS) may represent, for example, a progress rate for managing a work achievement level (CPVAL) or a per-control-item finish date for each of a design and procurement critical path method (CPM), a construction CPM, and a start-up CPM. The integrated project schedule (IPS) corresponding to the design field may be referred to as an engineering integrated project schedule (EIPS). The Level 4 working schedule may be divided by disciplines into an engineering working schedule (EWS), a procurement working schedule, a construction working schedule, and a start-up working schedule. The engineering working schedule (EWS) may represent a progress rate based on the issue date of a design result.

In a current power plant construction project, a method of calculating a design progress rate based on Level 4 is mainly used. However, as the project areas of construction projects have been diversified and the requirements of domestic and foreign construction projects have been diversified, the need to calculate a Level 3-based design progress rate together with a Level 4-based design progress rate has increased.

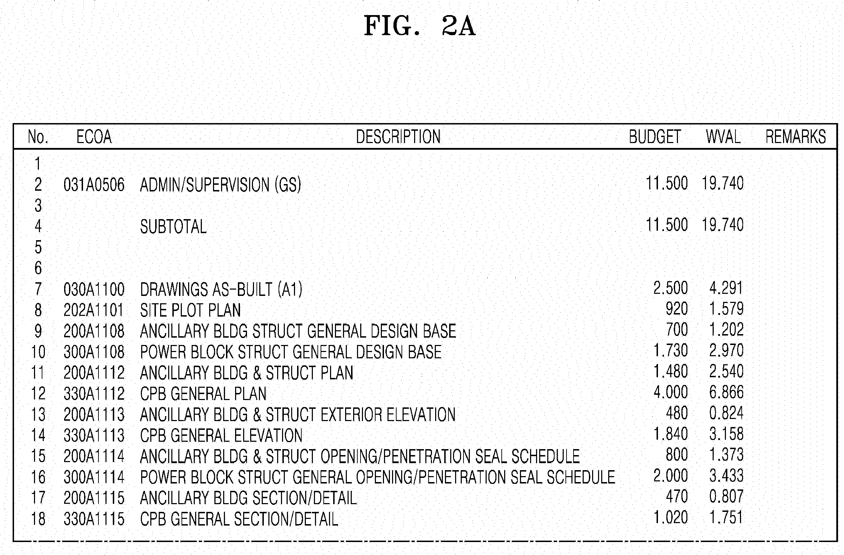

FIGS. 2A to 2C illustrate examples of information needed to calculate a Level 4-based design progress rate.

FIG. 2A illustrates an example of a table in which a budget in units of man hours input to issue a design result, which is a standard for calculating a Level 4 progress rate, and a weight value thereof are recorded. The design result may be identified by a design work management account (ECOA), which is described in Description of the table of FIG. 2A. According to the present disclosure, at least some of the information of the table illustrated in FIG. 2A may be stored in a baseline engineering man hour estimate (BEME) database (DB).

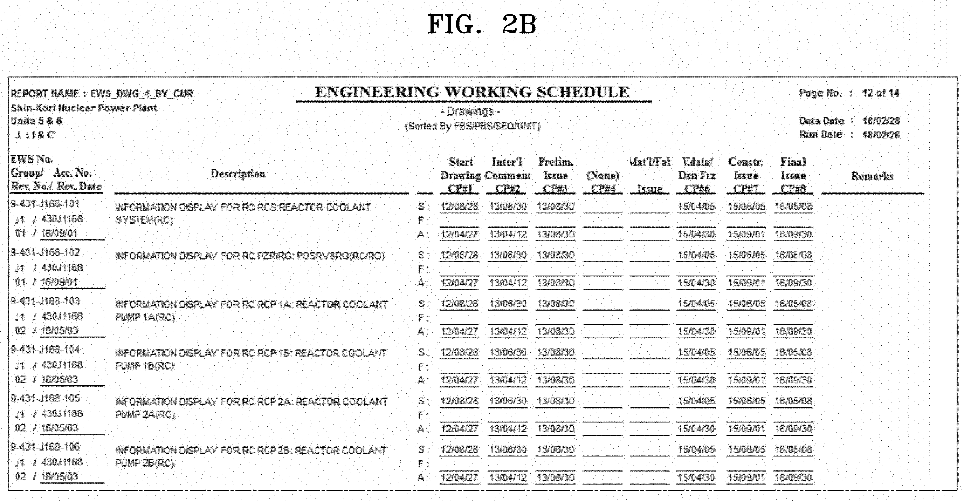

FIG. 2B illustrates an example of a table in which an actual issue date and a planned issue date for each control point (CP) of a design result corresponding to an engineering working schedule control number (EWS_No) are managed. According to the present disclosure, at least some of the information of the table illustrated in FIG. 2B may be stored in an engineering working schedule (EWS) DB.

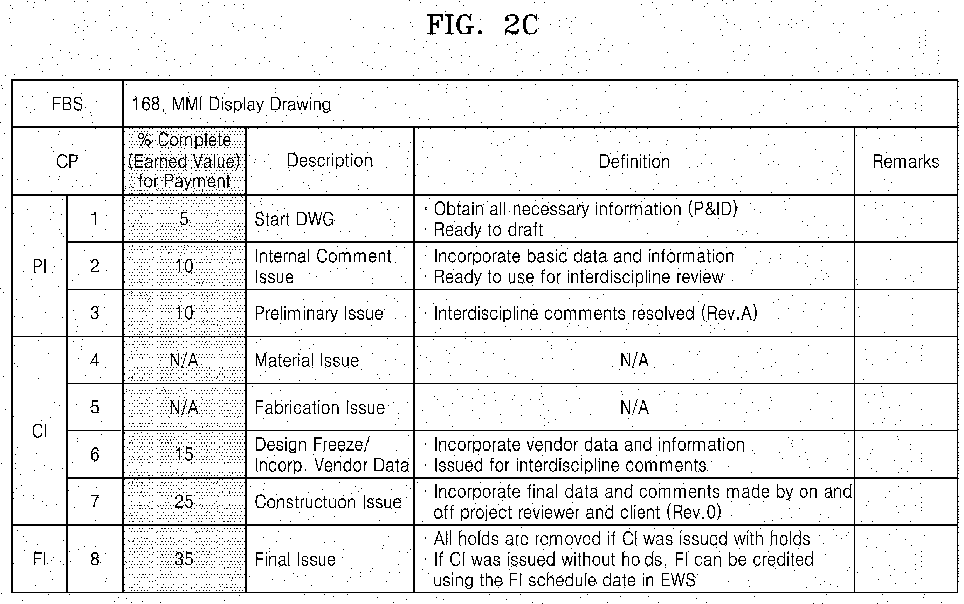

FIG. 2C illustrates an example of a table about a work achievement level (CPVAL) defined for each control point (CP). The table illustrated in FIG. 2C may be defined for each functional breakdown structure (FBS). According to the present disclosure, at least some of the information of the table illustrated in FIG. 2C may be stored in a work achievement level (CPVAL) DB.

In a nuclear/thermal power plant construction project, a progress rate is generally calculated based on a Level 4 engineering working schedule (EWS). The engineering working schedule (EWS) based progress rate may be referred to as a Level 4 progress rate. According to the Level 4 progress rate, for example, the baseline engineering man hour estimate (BEME), the work achievement level (CPVAL) for each design result control point (CP), and the planned issue date and the actual issue date of the design result may be managed based on the issue of design deliverables such as drawings, specifications (SPECs), statements, and reports.

The Level 4 progress rate may be generally calculated by dividing the overall contractual work of the project based on the work breakdown structure (WBS), allocating a man hour (MH and/or a work weight value (WV) to the design work to be provided to the project owner, developing the engineering working schedule (EWS) according to the engineering, procurement, construction, and start-up integrated project schedule developed based on the project milestone of the project, determining the design result issue time management, and developing the work achievement level (CPVAL) for each design result control point (CP).

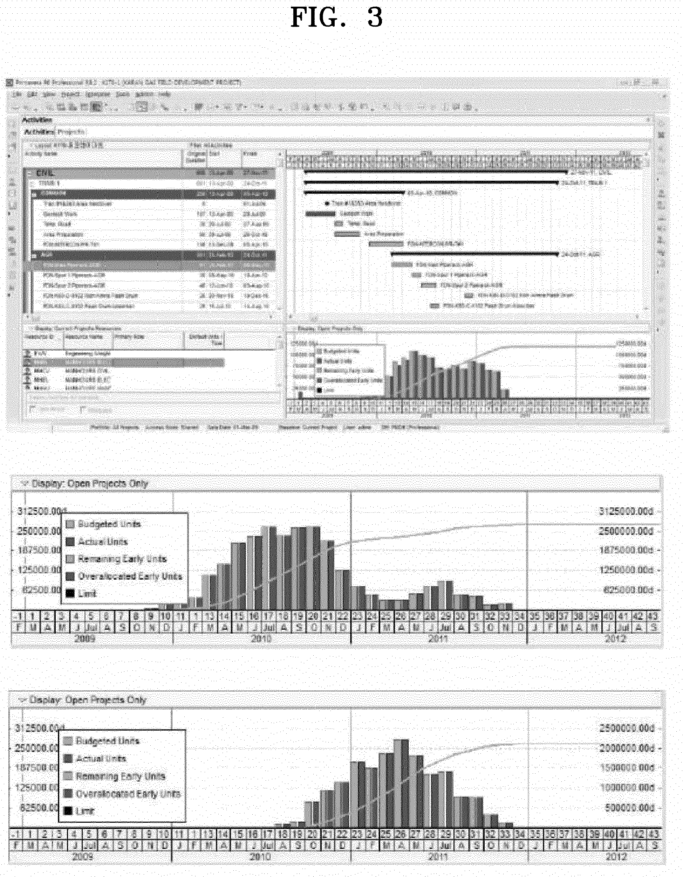

FIG. 3 illustrates an example of calculating a Level 3 progress rate.

Another method of calculating a design progress rate of a nuclear/thermal power plant construction project is to calculate a progress rate based on a work type control number (EIPS_No) of an engineering integrated project schedule (EIPS). The engineering integrated project schedule (EIPS) based progress rate may be referred to as a Level 3 progress rate.

The Level 3 progress rate may be calculated by using a method of developing a control item and a work breakdown structure (WBS) of the project by using a process control program, assigning a weight value and an execution schedule of the control item, and calculating a progress rate through input of a work achievement level (CPVAL) or a finish data for each control item while operating the schedule developed by a critical path method (CPM).

Nuclear/thermal plant construction projects are large-scale projects completed through a longer-period process than that of other construction projects. Tens of thousands of (e.g., about 45,000 to about 50,000) design deliverables include drawings, specifications (SPECs), statements, and reports, etc. For these design deliverables, the Level 4 progress rate may be calculated based on a baseline engineering man hour estimate (BEME), a per-control-point (CP) work achievement level (CPVAL), a planned issue date, and an actual issue date.

For the past 30 years, in nuclear/thermal power plant construction projects, Level 4 progress rates have been calculated in units of design deliverables and the Level 4 progress rates have been used based on internal/external progress rate reports and progress payments. However, recently, in domestic/foreign nuclear power plant construction projects, it has been needed to calculate and manage Level 3 progress rates in units of design control items at the request of project owners.

In order to calculate the Level 4 progress rate, tens of thousands of (e.g., about 20,000 to about 21,000) design deliverables should be systematically managed in association with a baseline engineering man hour estimate (BEME), a per-control-point (CP) work achievement level (CPVAL), a planned issue date, and an actual issue date. On the other hand, the Level 3 progress rate is calculated based on about 8,000 work type control numbers (EIPS_No).

In order to calculate the Level 4 progress rate, contract man hour (MH), design work unit account (ECOA), and engineering working schedule (EWS) control items are required. The number of design work management accounts (ECOA) is about 2,400, and design work management account number (ECOA_No) is, for example, '314P1191'. The number of design deliverables that are the control items of the engineering working schedule (EWS) is about 20,000 to about 21,000, and engineering working schedule control numbers (EWS_No) are, for example, '9-314-P191-010', '9-314-P191-020', '9 -314-P191-030 ', and '9-314-P191-040'.

In order to calculate the Level 3 progress rate, contract man hour (MH) and construction type management items of engineering integrated project schedule (EIPS) are required. The number of construction type management items of the engineering integrated project schedule (EIPS) is about 8,000, and work type control numbers (EIPS_No) are, for example, '9314P1911'.

As such, the Level 3 progress rate and the Level 4 progress rate are different in terms of the control items and the number thereof. Thus, in order to simultaneously calculate the Level 4 progress rate and the Level 3 progress rate in one system, it is required to identify the accurate association between the design result that is the control item of the Level 4 progress rate and the construction type management item that is the control item of the Level 3 progress rate. Also, an accurate comparison should be able to be made among the engineering man hour estimates (BEME). The design result of the Level 4 progress rate should be able to be accurately rolled up to the construction type management item of the Level 3 progress rate.

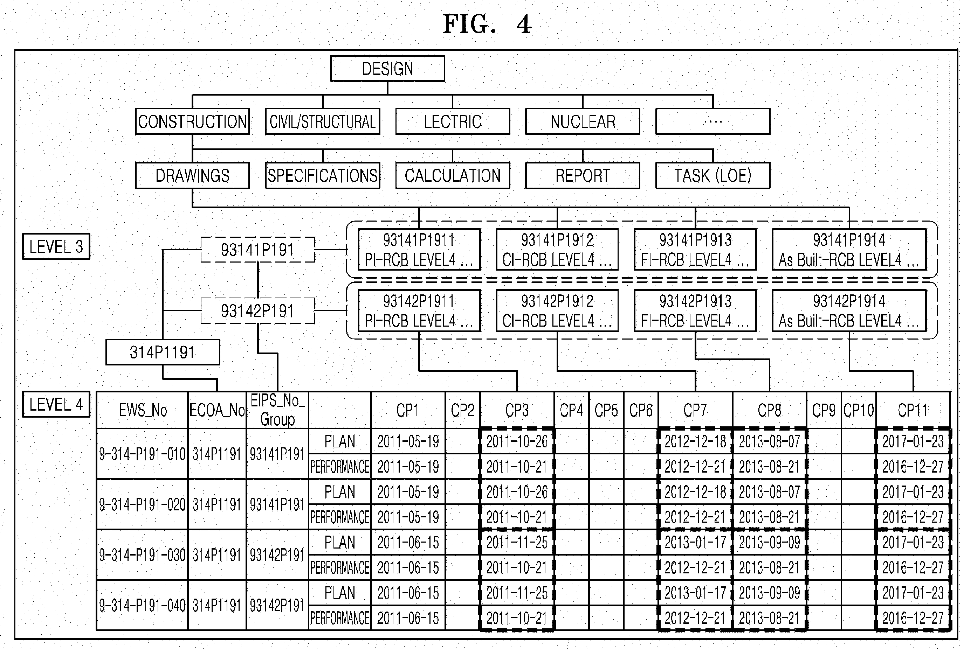

The present disclosure provides a system for equally calculating design progress rates based on different levels. An association concept for progress rate roll-up according to the present disclosure is illustrated as an example in FIG. 4. As illustrated, the association concept between the Level 3 (integrated project schedule, IPS) progress rate and the Level 4 (engineering working schedule, EWS) progress rate is applied.

FIG. 4 is a diagram for describing an association concept between a Level 4 progress rate and a Level 3 progress rate according to the present disclosure.

The design field may be divided into, for example, subclasses such as Construction, Civil/Structure, Electric, and Nuclear. The construction field may be divided into, for example, subclasses such as Drawing, Specification, Calculations, Report, and Task (LOE). FIG. 4 illustrates an example of a process for calculating a Level 3 progress rate from a Level 4 progress rate for management items with engineering working schedule control numbers (EWS_No) of '9-314-P191-010', '9-314-P191-020', '9-314-P191-030', and '9-314-P191-040'.

Referring to Level 4 of FIG. 4, an actual issue date and a planned issue date for each control point (CP) of design deliverables corresponding to the engineering working schedule control numbers (EWS_No) are recorded. The engineering working schedule control numbers (EWS_No) may be assigned a design work management account number (ECOA_No) of '314P1191'. According to the present disclosure, a work type control number group (EIPS_No_Group) corresponding to the engineering working schedule control numbers (EWS_No) may be assigned. For example, according to a preset numbering system, work type control number groups (EIPS_No_Group) of '93141 P191' and '93142P191' may be generated from engineering working schedule control numbers (EWS_No) of the '9-314-P191 -010', '9-314-P191-020', '9-314-P191-030', and '9-314-P191-040'. The Level 4 progress rate and the Level 3 progress rate may be associated with each other based on the design work management account number (ECOA_No) and the work type control number group (EIPS_No_Group).

Work type control numbers (EIPS_No) of '93141P1911', '93141P1912', '93141 P1913', and '93141 P1914' may be generated in response to the work type control number group (EIPS_No_Group) of '93141P191'. The work type control numbers (EIPS_No) of '93141P1911', '93141P1912', '93141P1913', and '93141 P1914' may respectively correspond to, for example, a third control point (CP3), a seventh control point (CP7), an eighth control point (CP8), and an eleventh control point (CP11) among the control points (CP) of the design result. The third control point (CP3) may be an approval (PI) point, the seventh control point (CP7) may be a construction (CI) point, the eighth control point (CP8) may be a final (FI) point, and the eleventh control point (CP11) may be a completion (AB) point. The above points (CP3, CP7, CP8, and CP11) are merely examples, and other control points may correspond to the work type control numbers (EIPS_No).

In this way, the work type control numbers (EIPS_No) of '93142P1911', '93142P1912', '93142P1913', and '93142P1914' may be generated corresponding to the work type control number group (EIPS_No_Group) of '93142P191'.

Below, descriptions will be given of a method of associating data to calculate the Level 3 progress rate from the Level 4 progress rate, a method of calculating the weight value of the work type control number group (EIPS_No_Group) and the weight value of the work type control number (EIPS_No), and a method of calculating the Level 3 progress rate based on the weight value of the work type control number group (EIPS_No_Group) and the weight value of the work type control number (EIPS_No).

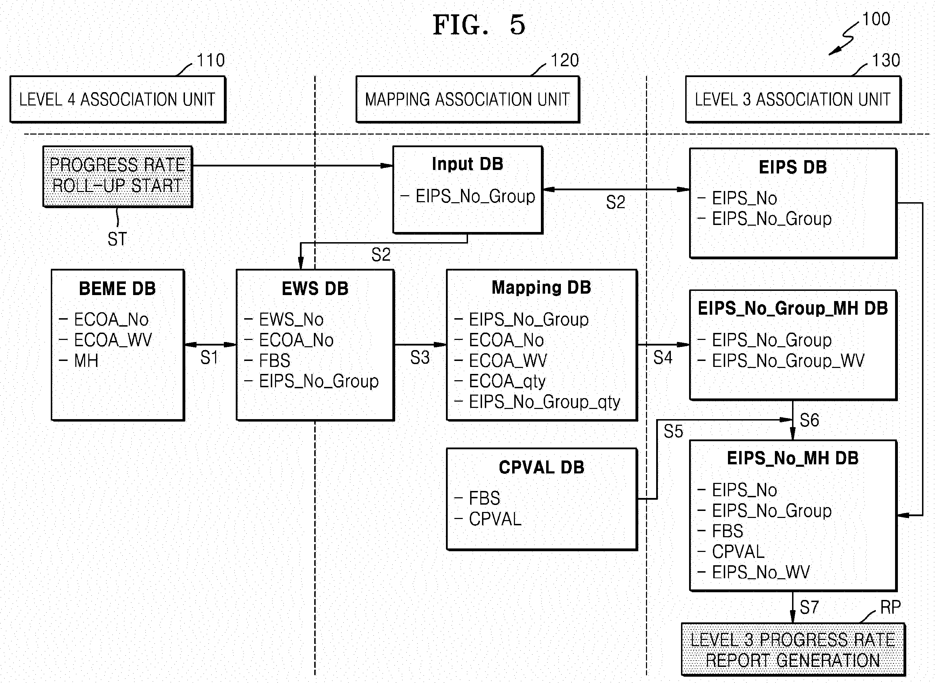

FIG. 5 schematically illustrates a block diagram of a progress rate roll-up system according to the present disclosure.

A progress rate roll-up system 100 may include a Level 4 association unit 110, a mapping association unit 120, and a Level 3 association unit 130. The progress rate roll-up system 100 may include or may be communicatively connected to at least one DB that stores information needed to calculate a Level 3 progress rate from a Level 4 progress rate. The at least one DB may include at least one of a baseline engineering man hour estimate (BEME) DB, an engineering working schedule (EWS) DB, an engineering integrated project schedule (EIPS) DB, a mapping DB, a work type control number group man hour (EIPS_No_Group_MH) DB, a work achievement level (CPVAL) DB, and a work type control number man hour (EIPS_No_MH) DB.

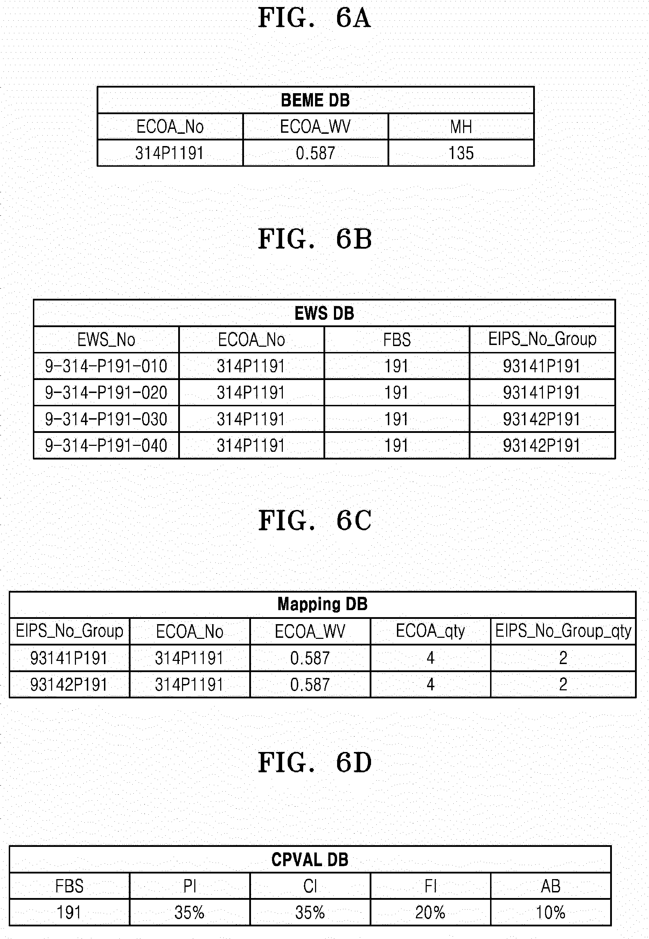

FIGS. 6A to 6G illustrates examples of a baseline engineering man hour estimate (BEME) database (DB), an engineering working schedule (EWS) DB, a mapping (Mapping) DB, a work achievement level (CPVAL) DB, an engineering integrated project schedule (EIPS) DB, a work type control number group man hour (EIPS_No_Group_MH) DB, and a work type control number man hour (EIPS_No_MH) DB in order to describe an operation of a progress rate roll-up system according to the present disclosure. In FIGS. 6A to 6G, not all the fields of the DBs may be displayed, and only some fields needed to perform a progress rate roll-up operation according to the present disclosure may be illustrated.

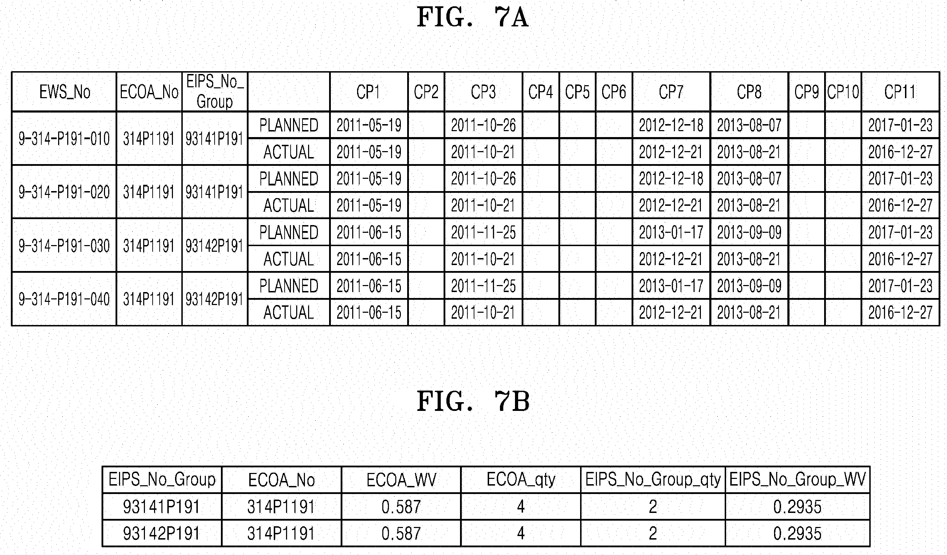

FIGS. 7A to 7D illustrate examples of tables in which information needed to perform an operation of a progress rate roll-up system according to the present disclosure is recorded. The tables of FIGS. 7A to 7D may represent a combination of some of the DBs of FIGS. 6A to 6G.

The DBs of FIGS. 6A to 6G and the tables of FIGS. 7A to 7D may store values in a matrix data structure as illustrated. When it is described that a value is stored in the DBs or the tables, it means that the value is stored in a row having a key value corresponding to the value to be stored and in a corresponding column. For example, a value of the work type control number group (EIPS_No_Group) may be stored in a row of the engineering working schedule control number (EWS_No) corresponding thereto.

Referring to FIG. 5, the progress rate roll-up system 100 may include the Level 4 association unit 110, the mapping association unit 120, and the Level 3 association unit 130.

According to an embodiment, the Level 4 association unit 110 may match the design work unit account (ECOA) of the baseline engineering man hour estimate (BEME) DB with the design work unit account (ECOA) of the engineering working schedule (EWS) DB. The baseline engineering man hour estimate (BEME) DB may store data for calculating the engineering working schedule (EWS) based progress rate of Level 4, and the engineering working schedule (EWS) DB may store the list and schedule of a design result.

The mapping association unit 120 may manage the mapping DB. The mapping DB may store the design work unit account quantity (ECOA_qty) and the work type control number group quantity (EIPS_No_Group_qty) for each work type control number group (EIPS_No_Group). The mapping association unit 120 may generate a work type control number group (EIPS_No_Group) to associate the work type control number (EIPS_No) and the engineering working schedule control number (EWS_No) with each other. Also, the mapping association unit 120 may store the design work unit account quantity (ECOA_qty) and the work type control number group quantity (EIPS_No_Group_qty) for each work type control number group (EIPS_No_Group) in the mapping DB. The work type control number (EIPS_No) may be a control item of the Level 3 engineering integrated project schedule (EIPS), and the engineering working schedule control number (EWS_No) may be a control item of the Level 4 engineering working schedule (EWS).

The Level 3 association unit 130 may calculate a work type control number group weight value (EIPS_No_Group_WV) based on the design work unit account quantity (ECOA_qty) and the work type control number group quantity (EIPS_No_Group_qty). The Level 3 association unit 130 may calculate a work type control number weight value (EIPS_No_WV) based on the per-control-point (CP) work achievement level (CPVAL, %Complete Value) of the design result distinguishing the work type control number (EIPS_No). The Level 3 association unit 130 may calculate the Level 3 progress rate for each work type control number (EIPS_No) in association with the engineering working schedule (EWS) DB.

Particularly, as for the DB, the baseline engineering man hour estimate (BEME) DB, the engineering working schedule (EWS) DB, and the work achievement level (CPVAL) DB may store data for calculating a Level 4 schedule and may be collectively referred to as a Level 4 DB. The engineering integrated project schedule (EIPS) DB, the work type control number group man hour (EIPS_No_Group_MH) DB, and the work type control number man hour (EIPS_No_MH) DB may store data for calculating a Level 3 schedule and may be collectively referred to as a Level 3 DB. The mapping DB may store data needed to generate the Level 3 schedule in the Level 4 schedule. The progress rate roll-up system 100 may further include an input DB.

As illustrated in FIGS. 5 and 6A to 6G, the baseline engineering man hour estimate (BEME) DB may store the design work unit account number (ECOA_No) and the design work unit account weight value (ECOA_WV) corresponding thereto. The baseline engineering man hour estimate (BEME) DB may store a budget (MH) in units of man hours corresponding to the design work unit account weight value (ECOA_WV). Data stored in the baseline engineering man hour estimate (BEME) DB may be output as, for example, the table of FIG. 2A.

As illustrated in FIG. 6A, the baseline engineering man hour estimate (BEME) DB may store a design work unit account number (ECOA_No) of '314P1191', a design work unit account weight value (ECOA_WV) of '0.587', and a budge (MH) of '135' corresponding thereto.

According to another embodiment, the baseline engineering man hour estimate (BEME) DB may store a baseline engineering man hour estimate (a budget in units of man hours) and weight value information corresponding to the design work unit account (ECOA).

The engineering working schedule (EWS) DB may store an engineering working schedule control number (EWS_No) and a design work unit account number (ECOA_No) to which the engineering working schedule control number (EWS_No) belongs. Also, the engineering working schedule (EWS) DB may store the number of a functional breakdown structure (FBS) corresponding to the engineering working schedule control number (EWS_No).

According to another embodiment, the engineering working schedule (EWS) DB may store the plan and performance information of a design result corresponding to the engineering working schedule control number (EWS_No), and the related design work unit account (ECOA) information for calculating a progress rate.

The engineering working schedule control number (EWS_No) and the design work unit account number (ECOA_No) may be determined according to a functional breakdown structure (FBS), a physical breakdown structure (PBS), an organization breakdown structure (OBS), and a preset numbering rule.

The engineering working schedule (EWS) DB may store a work type control number group (EIPS_No_Group) corresponding to the engineering working schedule control number (EWS_No). The work type control number group (EIPS_No_Group) may be generated and stored by the mapping association unit 120.

As illustrated in FIG. 6B, the engineering working schedule (EWS) DB may store engineering working schedule control numbers (EWS_No) of '9-314-P191 -010', '9-314-P191-020', '9-314-P191-030', and '9-314-P191-040', a design work unit account number (ECOA_No) of "314P1191", and a functional breakdown structure (FBS) of "191" corresponding thereto. Also, the engineering working schedule (EWS) DB may store a work type control number group (EIPS_No_Group) of '93141P191' corresponding to the engineering working schedule control numbers (EWS_No) of '9-314-P191-010' and '9-314-P191-020', and a work type control number group (EIPS_No_Group) of '93142P191' corresponding to the engineering working schedule control numbers (EWS_No) of '9-314-P191-030' and '9-314-P191-040'.

The Level 4 association unit 110 may manage the baseline engineering man hour estimate (BEME) DB and the engineering working schedule (EWS) DB and may associate the baseline engineering man hour estimate (BEME) DB and the engineering working schedule (EWS) DB with each other based on the design work unit account number (ECOA_No) (operation S1).

The Level 4 association unit 110 may match the design work unit account number (ECOA_No) in the baseline engineering man hour estimate (BEME) DB and the design work unit account number (ECOA_No) in the engineering working schedule (EWS) DB with each other. In other words, the Level 4 association unit 110 may allow the design work unit account number ECOA_No to exist in both the baseline engineering man hour estimate (BEME) DB and the engineering working schedule (EWS) DB.

Operation S1 may be performed before a progress rate roll-up operation starts. For example, when new data is added to the engineering working schedule (EWS) DB, the design work unit account number (ECOA_No) of the baseline engineering man hour estimate (BEME) DB may be referred to.

The engineering integrated project schedule (EIPS) DB may store a work type control number (EIPS_No). The work type control number (EIPS_No) may be a standard for calculating the Level 3 progress rate.

According to another embodiment, the progress rate roll-up system 100 may further include an EIPS schedule DB. The EIPS schedule DB may store related information a Level 3-based work type control number (EIPS_No) and related information such as a planned schedule and a actual schedule corresponding thereto.

The mapping association unit 120 may generate a work type control number group (EIPS_No_Group) corresponding to the engineering working schedule control number (EWS_No) based on the work type control number (EIPS_No) of the engineering integrated project schedule (EIPS) DB and store the same in the engineering working schedule (EWS) DB (operation S2). The mapping association unit 120 may generate a work type control number group (EIPS_No_Group) by analyzing a number system of engineering working schedule control numbers (EWS_No).

The mapping association unit 120 may extract a work type control number group (EIPS_No_Group) in associated with the work type control number (EIPS_No) of the engineering integrated project schedule (EIPS) DB and the engineering working schedule control number (EWS_No) of the engineering working schedule (EWS) DB. The work type control number group (EIPS_No_Group) may be an important key value for calculating the Level 3 progress rate by using an operation of the mapping association unit 120. When necessary, a manager may add or delete an item of the engineering working schedule (EWS) DB to match the engineering working schedule control number (EWS_No) with the work type control number group (EIPS_No_Group) by using the mapping association unit 120.

According to an example, the mapping association unit 120 may extract a work type control number group (EIPS_No_Group) from the engineering working schedule control numbers (EWS_No) and store the same in an input DB and may store the work type control number group (EIPS_No_Group) stored in the input DB, in the engineering working schedule (EWS) DB and the engineering integrated project schedule (EIPS) DB.

According to another example, the mapping association unit 10 may further include an input data unit, and the input data unit may generate a work type control number group (EIPS_No_Group) from the engineering integrated project schedule (EIPS) DB based on the work type control number (EIPS_No) and store the generated work type control number group (EIPS_No_Group) in the engineering working schedule (EWS) DB.

According to another example, the manager may input a work type control number group (EIPS_No_Group) into the engineering working schedule (EWS) DB and the engineering integrated project schedule (EIPS) DB by using the mapping association unit 120.

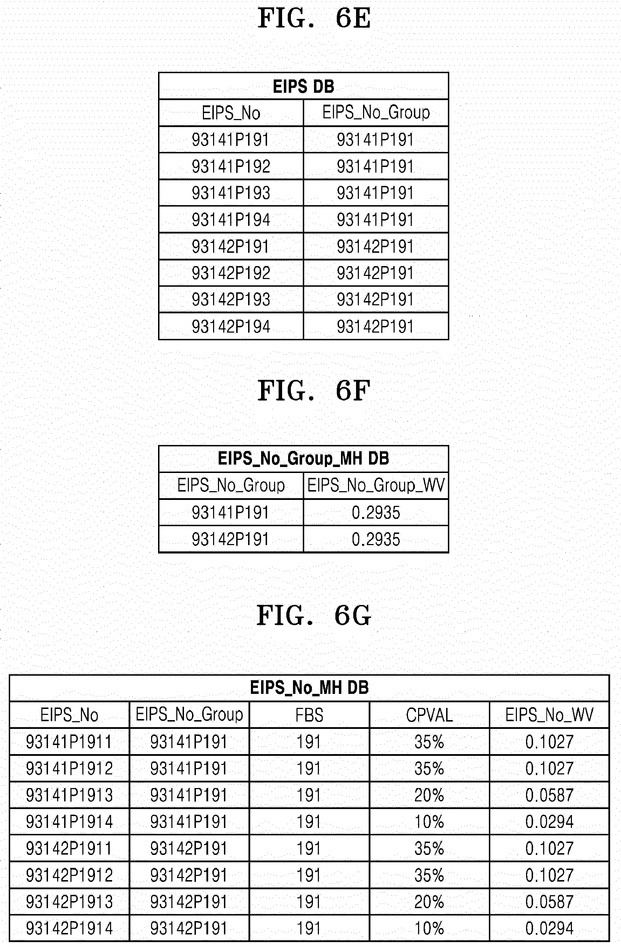

Accordingly, as illustrated in FIGS. 6B and 6E, the work type control number group (EIPS_No_Group) of '93141P191' and the work type control number group (EIPS_No_Group) of '93142P191' may be stored in the engineering working schedule (EWS) DB and the engineering integrated project schedule (EIPS) DB. As illustrated in FIG. 6B, the work type control number group (EIPS_No_Group) of '93141 P191' may correspond to the engineering working schedule control numbers (EWS_No) of '9-314-P191-010' and '9-314-P191-020', and the work type control number group (EIPS_No_Group) of '93142P191' may correspond to the engineering working schedule control numbers (EWS_No) of '9-314-P191-030' and '9-314-P191-040'. Also, as illustrated in FIG. 6E, the work type control number group (EIPS_No_Group) of '93141 P191' may correspond to the work type control numbers (EIPS_No) of '93141P1911' to '93141P1914', and the work type control number group (EIPS_No_Group) of '93142P191' may correspond to the work type control numbers (EIPS_No) of '93142P1911' to '93142P1914'.

In this example, a table may be written as illustrated in FIG. 7A. The table of FIG. 7A may store a design work unit account number ECOA_No, a work type control number group (EIPS_No_Group), a planned schedule, and an actual schedule of a target corresponding to an engineering working schedule control number (EWS_No).

The mapping DB may store the design work unit account number (ECOA_No), the design work unit account weight value (ECOA_WV), the design work unit account quantity (ECOA_qty), and the work type control number group quantity (EIPS_No_Group_qty) corresponding to the work type control number group (EIPS_No_Group). According to another example, the mapping DB may store a design work unit account (ECOA) and quantity information for rolling up a Level 4 progress rate to a Level 3 progress rate.

The mapping association unit 120 may calculate a design work unit account quantity (ECOA_qty) and a work type control number group quantity (EIPS_No_Group_qty) and store the same in the mapping DB (operation S3).

The mapping association unit 120 may aggregate a design work unit account weight value (ECOA_WV), a design work unit account quantity (ECOA_qty), and a work type control number group quantity (EIPS_No_Group_qty), which are information needed to write a Level 4 schedule, and store the same in the mapping DB. The information stored in the mapping DB may be needed to calculate a Level 3 progress rate. The design work unit account weight value (ECOA_WV) may mean a weight value (WV) for each design work unit account (ECOA).

The mapping association unit 120 may extract a design work unit account number (ECOA_No) corresponding to the work type control number group (EIPS_No_Group) with reference to the engineering working schedule (EWS) DB and extract a design work unit account weight value (ECOA_WV) corresponding to the design work unit account number (ECOA_No) with reference to the baseline engineering man hour estimate (BEME) DB. The mapping association unit 120 may store the design work unit account number (ECOA_No) and the design work unit account weight value (ECOA_WV) in the mapping DB corresponding to the work type control number group (EIPS_No_Group).

The mapping association unit 120 may count the number of engineering working schedule control numbers (EWS_No) of the same design work unit account number (ECOA_No) with reference to the engineering working schedule (EWS) DB and calculate the design work unit account quantity (ECOA_qty). The mapping association unit 120 may count the number of engineering working schedule control numbers (EWS_No) of the same work type control number group (EIPS_No_Group) with reference to the engineering working schedule (EWS) DB and calculate the work type control number group quantity (EIPS_No_Group_qty). The mapping association unit 1200 may store the calculated design work unit account quantity ECOA_qty and the work type control number group quantity (EIPS_No_Group_qty) in the mapping DB corresponding to the work type control number group (EIPS_No_Group). A mapping DB according to the example is illustrated FIG. 6C.

The work type control number group man hour (EIPS_No_Group_MH) DB may store a work type control number group weight value (EIPS_No_Group_WV) corresponding to the work type control number group (EIPS_No_Group). The work type control number group man hour (EIPS_No_Group_MH) DB may have a DB name of 'EIPS_BEME_REL DB'.

The Level 3 association unit 130 may calculate a work type control number group weight value (EIPS_No_Group_WV) based on the design work unit account weight value (ECOA_WV), the design work unit account quantity (ECOA_qty), and the work type control number group quantity (EIPS_No_Group_qty) stored in the mapping DB and store the same in the work type control number group man hour (EIPS_No_Group_MH) DB (operation S4).

Before calculating the progress rate in units of the work type control number (EIPS_No) that is a standard for calculating the Level 3 progress rate, a work type control number group weight value (EIPS_No_Group_WV) of the work type control number group (EIPS_No_Group) may be calculated. The work type control number group weight value (EIPS_No_Group_WV) may be generated by using the information stored in the mapping DB.

The work type control number group weight value (EIPS_No_Group_WV) may be calculated as a value obtained by dividing the product of the design work unit account weight value (ECOA_WV) and the work type control number group quantity (EIPS_No_Group_qty) by the design work unit account quantity (ECOA_qty). For example, the work type control number group weight value (EIPS_No_Group_WV) may be calculated according to Equation below.

[Equation]

$$EIPS\_No\_Group\_WV = (ECOA\_WV * EIPS\_No\_Group\_qty) / ECOA\_qty$$

Here, the design work unit account weight value (ECOA_WV), the design work unit account quantity (ECOA_qty), and the work type control number group quantity (EIPS_No_Group_qty) may be values that are calculated by the mapping association unit 120 and then stored in the mapping DB.

FIG. 6F illustrates the work type control number group man hour (EIPS_No_Group_MH) DB storing the work type control number group weight value (EIPS_No_Group_WV) calculated according to the present example. As illustrated in FIG. 6F, the work type control number group weight values (EIPS_No_Group_WV) corresponding to the work type control number groups (EIPS_No_Group) of '93141P191' and '93142P191' may all be 0.2935.

FIG. 7B illustrates a table in which information for calculating the work type control number group weight value (EIPS_No_Group_WV) corresponding to the work type control number group (EIPS_No_Group) by the Level 3 association unit 130 is recorded.

The work achievement level (CPVAL) DB may store a functional breakdown structure (FBS) and a per-control-point work achievement level (CPVAL) corresponding to the functional breakdown structure (FBS). The control point (CP) may include an approval point (PI), a construction point (CI), a final point (FI), and a completion point (AB). However, this may vary depending on results, and some points may be omitted or other points may be added. For example, the per-control-point work achievement level (CPVAL) may include at least one of an approval point weight value (PI CPVAL), a construction point weight value (CI CPVAL), a final point weight value (FI CPVAL), and a completion point weight value (AB CPVAL).

The per-control-point work achievement level (CPVAL) may be defined according to the functional breakdown structure (FBS). For example, FIG. 6D illustrates the work achievement level (CPVAL) DB in which the work achievement level (CPVAL) for each result having a value of the functional breakdown structure (FBS) of '191' is stored. As illustrated in FIG. 6D, the per-control-point work achievement level (CPVAL) may include, for example, an approval point weight value (PI CPVAL) of 35 % , a construction point weight value (CI CPVAL) of 35 % , a final point weight value (FI CPVAL) of 20 %, and a completion point weight value (AB CPVAL) of 10 %.

The work type control number (EIPS_No), which is a control unit of the Level 3 schedule, may be subdivided and managed for each control point (CP) distinguishing the work achievement level (CPVAL) of a result.

The work type control number man hour (EIPS_No_MH) DB may store the work type control number (EIPS_No), the work type control number group (EIPS_No_Group), the functional breakdown structure (FBS), the per-control-point work achievement level (CPVAL), and the work type control number weight value (EIPS_No_WV). The work type control number man hour (EIPS_No_MH) DB may have a DB name of 'EIPS_CPVAL DB'.

As illustrated in the engineering integrated project schedule (EIPS) DB of FIG. 6E, the work type control number group (EIPS_No_Group) of '93141 P191' may include the work type control number (EIPS_No) of '93141 P1911' corresponding to the approval point (PI), the work type control number (EIPS_No) of '93141 P1912' corresponding to the construction point (CI), the work type control number (EIPS_No) of '93141 P1913' corresponding to the final point (FI), and the work type control number (EIPS_No) of '93141 P1914' corresponding to the completion point (AB).

The Level 3 association unit 130 may receive the per-control-point work achievement level (CPVAL) from the work achievement level (CPVAL) DB (operation S5). The Level 3 association unit 130 may calculate a work type control number weight value (EIPS_No_WV) based on the work type control number group weight value (EIPS_No_Group_WV) and the per-control-point work achievement level (CPVAL) and store the work type control number weight value (EIPS_No_WV) in the engineering integrated project schedule (EIPS) DB corresponding to the work type control number (EIPS_No) (operation S6).

In order to calculate a progress rate for each work type control number (EIPS_No) that is a control unit of the Level 3 schedule, the work type control number group weight value (EIPS_No_Group_WV) may be subdivided according to the per-control-point work achievement level (CPVAL). The progress rate distinguished for each work type control number (EIPS_No) may be stored as a work type control number weight value (EIPS_No_WV).

Because the work type control number weight value (EIPS_No_WV) is 0.2935 as stored in the work type control number man hour (EIPS_No_MH), the work type control number (EIPS_No) of '93141 P1911' may be assigned a weight value (WV) of 35 % corresponding to the approval point (PI) and thus the work type control number weight value (EIPS_No_WV) may be 0.1027; the work type control number (EIPS_No) of '93141P1912' may be assigned a weight value (WV) of 35 % corresponding to the construction point (CI) and thus the work type control number weight value (EIPS_No_WV) may be 0.1027; the work type control number (EIPS_No) of '93141 P1913' may be assigned a weight value (WV) of 20 % corresponding to the final point (FI) and thus the work type control number weight value (EIPS_No_WV) may be 0.0587; and the work type control number (EIPS_No) of '93141P1914' may be assigned a weight value (WV) of 10 % corresponding to the completion point (AB) and thus the work type control number weight value (EIPS_No_WV) may be 0.0294.

According to an example, the work type control number weight value (EIPS_No_WV) may be calculated according to Equation below.

[Equation]

$$EIPS\_No\_WV = EIPS\_No\_Group\_WV * \text{Per-Control-Point Work Achievement Level (CPVAL) of Corresponding FBS}$$

The work type control number group (EIPS_No_Group) of '93142P191' may also be similarly calculated, and the result thereof may be stored in the work type control number man hour (EIPS_No_MH) DB as illustrated in FIG. 6G.

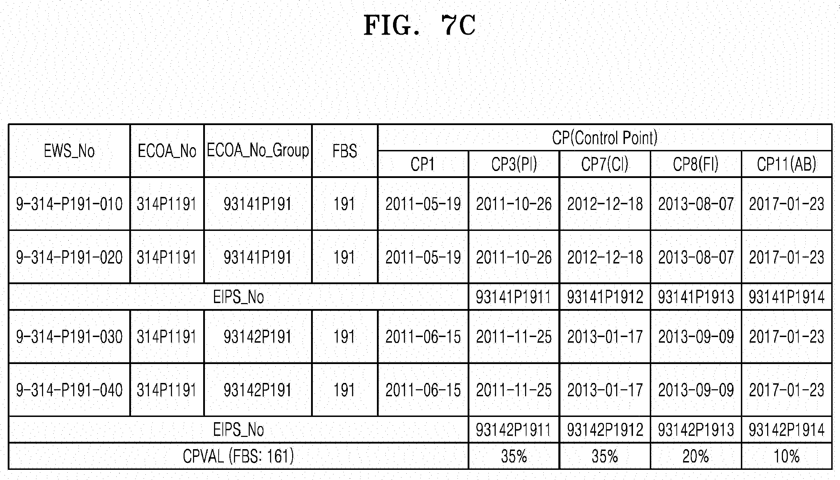

FIG. 7C is a table for describing an operation of the Level 3 association unit 130 described above. In the table of FIG. 7C, the relationship between the Level 4-based engineering working schedule control number (EWS_No), the Level 3-based work type control number (EIPS_No), and the per-control-point work achievement level (CPVAL) are easily illustrated.

The Level 3 association unit may calculate a Level 3 progress rate by determining whether the work type control number weight value (EIPS_No_WV) is achieved based on the list and schedule of the design result stored in the engineering working schedule (EWS) DB (operation S7). The Level 3 association unit 130 may generate a Level 3 progress rate report or a Level 3 schedule.

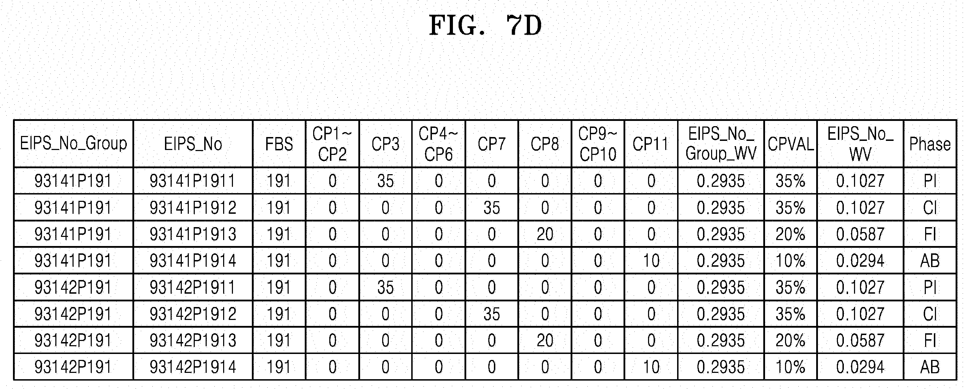

FIG. 7D illustrates a work type control number man hour (EIPS_No_MH) DB according to another example. The work type control number man hour (EIPS_No_MH) DB of FIG. 7D stores more information than the work type control number man hour (EIPS_No_MH) DB of FIG. 6G; however, the present disclosure is not limited thereto.

The Level 4-based design work unit account weight value (ECOA_WV) may be the same when the Level 3-based work type control number weight value (EIPS_No_WV is accumulated for the work type control numbers (EIPS_No) corresponding to the design work unit account number (ECOA_No). In this example, the accumulation values of the design work unit account weight value (ECOA_WV) and the work type control number weight value (EIPS_No_WV) may all be equal to 0.587.

The progress rate roll-up system 100 according to the present disclosure may calculate the Level 3 progress rate from the Level 4 progress rate as described above. The progress rate roll-up system 100 may improve the reliability by establishing data input and check logic for data matching according to the association between the Level 4 DB and the Level 3 DB. By providing a system capable of progress rate roll-up from the Level 4 progress rate to the Level 3 progress rate, a more efficient and active action may be taken in response to the individual request of various project owners.

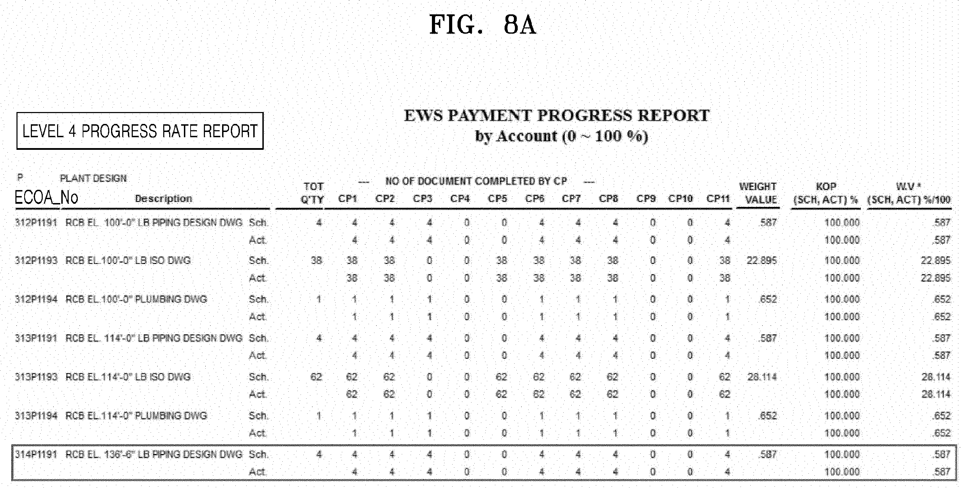

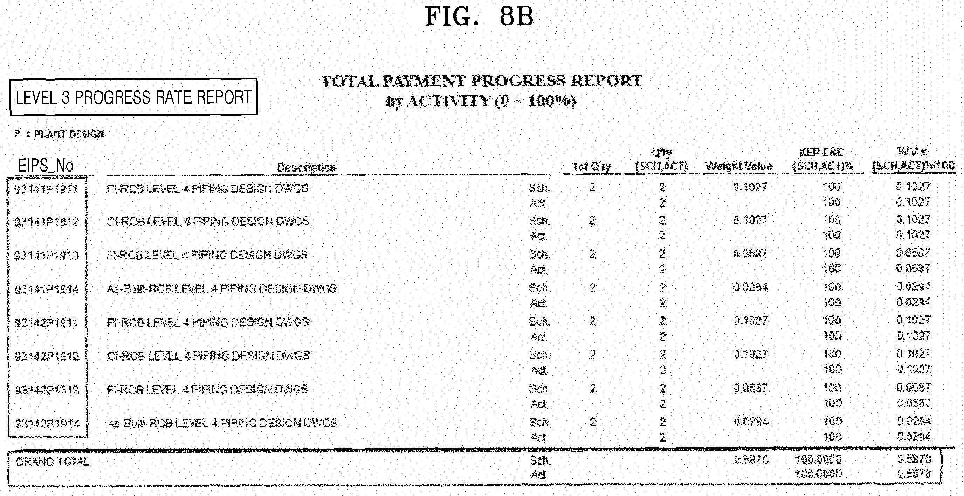

FIGS. 8A and 8B respectively illustrate examples of a Level 4 progress rate report and a Level 3 progress rate report.

The progress rate of the design work unit account number (ECOA_No) of '314P1191' may be simply represented in the Level 4 progress rate report of FIG. 8A, whereas the progress rate of the work type control numbers (EIPS_No) of '93141P1914' and '93142P1911 ～ 93142P1914 ' corresponding to the design work unit account number (ECOA_No) of '314P1191' may be represented in more detail in the Level 3 progress rate report of FIG. 8B.

As described above, according to the present disclosure, the Level 3 progress rate may be calculated from the Level 4 progress rate.

In the related art, a function of calculating a progress rate by associating works and ranges of different schedule levels through a roll-up function is not provided in an existing commercial program. According to the progress rate roll-up system of the present disclosure, it is possible to quickly cope with the competitive situation in the project order market of the global power plant engineering field in the future. The Level 3 association unit, the mapping association unit, and the Level 4 association unit proposed in the present disclosure may be used not only for progress rate roll-up but also for analyzing the association logic of works and checking whether the entire budget item is included. Because the progress rate status of various level standards may predict various levels of delay items in advance, subsequent process effects may be identified and treated and problems may be early detected to minimize delay items. The roll-up function from the lower level to the upper level and the related DB may be used as data for Level 3 planning by allowing the upper-level budget to be calculated from the Level 4 experience data of the existing project in the process of budgeting.

According to the progress rate roll-up system of the present disclosure, progress rates of different level standards may be simultaneously calculated by associating the schedules based on different levels according to systematic association standards. The schedules of various level standards calculated as such may provide progress rate data necessary for decision making by the project owner's management, middle manager, and working group. Thus, more accurate analysis data may be provided to complete a project within an allocated budget range and a given construction period of a domestic/foreign nuclear/thermal power plant construction project, and the project owner may analyze an accurate project status and may perform domestic/foreign nuclear power project and plant service management.

According to the progress rate roll-up system according to the present disclosure, it is possible to occupy a dominant position in the competitive situation of the domestic and global power plant engineering fields.

According to the present disclosure, the progress rate may be calculated by associating works and progress rates of different schedule levels through a roll-up function, and the project progress may be measured according to various requests of the project owner in the future. The association between the Level 3 progress rate and the Level 4 progress rate may allow the project participants, including the project owner, to analyze delay factors and effects at various project stages and may minimize delay factors in future projects.

Because the schedule and DB developed based on Level 4 in the previous project may be utilized through the roll-up function, it may be used to develop a Level 3 schedule based on Level 3 that is the upper level. By using the function of the mapping association unit, it is possible to improve the completion degree of the schedule through work target status comparison of each level schedule. Also, the DB constructed in each association unit may be utilized in future projects.

By using the association of upper/lower level schedules, the progress rate roll-up function, and the related DB, more reliable analysis data may be provided to complete the project within a limited budget range and a given construction period, and this may be important data for decision making by the project owner's management, middle manager, and working group. This function may also reduce project risks and improve economics.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the spirit and scope of the disclosure as defined by the following claims.

**Claims**

1. A progress rate roll-up system comprising:

   a baseline engineering man hour estimate (BEME) database (DB) for calculating a Level 4 engineering working schedule (EWS) based progress rate;
   an engineering working schedule (EWS) DB for managing a list and schedule of a design result stored therein; and
   a Level 4 association unit for matching a design work unit account (ECOA) of the baseline engineering man hour estimate (BEME) DB with a design work unit account (ECOA) of the engineering working schedule (EWS) DB.

**2.** The progress rate roll-up system of claim 1, further comprising
a mapping association unit for generating a work type control number group (EIPS_No_Group) and managing a mapping DB storing a design work unit account quantity (ECOA_qty) and a work type control number group quantity (EIPS_No_Group_qty) for each work type control number group (EIPS_No_Group) in order to associate a work type control number (EIPS_No), which is a control item of a Level 3 engineering integrated project schedule (EIPS), and an engineering working schedule control number (EWS_No), which is a control item of an engineering working schedule (EWS), with each other.

**3.** The progress rate roll-up system of claim 2, further comprising
a Level 3 association unit for calculating a work type control number group weight value (EIPS_No_Group_WV) based on the design work unit account quantity (ECOA_qty) and the work type control number group quantity (EIPS_No_Group_qty), calculating a work type control number weight value (EIPS_No_WV) based on a work achievement level (CPVAL, %Complete Value) for each control point (CP) of the design result distinguishing the work type control number (EIPS_No), and calculating a progress rate for each work type control number (EIPS_No) in association with the engineering working schedule (EWS) DB.

**4.** A progress rate roll-up system comprising:

a baseline engineering man hour estimate (BEME) database (DB) storing a design work unit account number (ECOA_No) and a design work unit account weight value (ECOA_WV);
an engineering working schedule (EWS) DB storing an engineering working schedule control number (EWS_No) and a design work unit account number (ECOA_No); and
a Level 4 association unit for managing the baseline engineering man hour estimate (BEME) DB and the engineering working schedule (EWS) DB and associating the baseline engineering man hour estimate (BEME) DB and the engineering working schedule (EWS) DB with each other based on the design work unit account number (ECOA_No).

**5.** The progress rate roll-up system of claim 4, further comprising:

an engineering integrated project schedule (EIPS) DB storing a work type control number (EIPS_No); and
a mapping association unit for generating a work type control number group (EIPS_No_Group) corresponding to the engineering working schedule control number (EWS_No) based on the work type control number (EIPS_No) of the engineering integrated project schedule (EIPS) DB and storing the work type control number group (EIPS_No_Group) in the engineering working schedule (EWS) DB.

**6.** The progress rate roll-up system of claim 5, further comprising
a mapping DB storing a design work unit account quantity (ECOA_qty) and a work type control number group quantity (EIPS_No_Group_qty) corresponding to the work type control number group (EIPS_No_Group),
wherein the mapping association unit calculates the design work unit account quantity (ECOA_qty) based on the number of engineering working schedule control numbers (EWS_No) of the same design work unit account number (ECOA_No), stores the design work unit account quantity (ECOA_qty) in the mapping DB, calculates the work type control number group quantity (EIPS_No_Group_qty) based on the number of engineering working schedule control numbers (EWS_No) of the same work type control number group (EIPS_No_Group), and stores the work type control number group quantity (EIPS_No_Group_qty) in the mapping DB.

**7.** The progress rate roll-up system of claim 6, further comprising:

a work type control number group man hour (EIPS_No_Group_MH) DB storing a work type control number group weight value (EIPS_No_Group_WV) corresponding to the work type control number group (EIPS_No_Group); and
a Level 3 association unit for calculating the work type control number group weight value (EIPS_No_Group_WV) based on the design work unit account weight value (ECOA_WV), the design work unit account quantity (ECOA_qty), and the work type control number group quantity (EIPS_No_Group_qty) and storing the work type control number group weight value (EIPS_No_Group_WV) in the work type control number group man hour (EIPS_No_Group_MH) DB.

**8.** The progress rate roll-up system of claim 7, wherein
the work type control number group weight value (EIPS_No_Group_WV) is calculated by dividing the product of the design work unit account weight value (ECOA_WV) and the work type control number group quantity (EIPS_No_Group_qty) by the design work unit account quantity (ECOA_qty).

9. The progress rate roll-up system of claim 7 or 8, further comprising
a work achievement level (CPVAL) DB storing a functional breakdown structure (FBS) and a per-control-point (CP) work achievement level (CPVAL) corresponding to the functional breakdown structure (FBS).

10. The progress rate roll-up system of claim 9, wherein
the per-control-point (CP) work achievement level CPVAL includes at least one of an approval point weight value (PI CPVAL), a construction point weight value (CI CPVAL), a final point weight value (FI CPVAL), and a completion point weight value (AB CPVAL).

11. The progress rate roll-up system of claim 9 or 10, further comprising
a work type control number man hour (EIPS_No_MH) DB storing the work type control number (EIPS_No), the work type control number group (EIPS_No_Group), the functional breakdown structure (FBS), the per-control-point (CP) work achievement level (CPVAL), and a work type control number weight value (EIPS_No_WV),
wherein the Level 3 association unit calculates a work type control number weight value (EIPS_No_WV) based on the work type control number group weight value (EIPS_No_Group_WV) and the per-control-point (CP) work achievement level (CPVAL).

12. The progress rate roll-up system of claim 11, wherein
the Level 3 association unit calculates a Level 3 progress rate by determining whether the work type control number weight value (EIPS_No_WV) is achieved based on the list and schedule of the design result stored in the engineering working schedule (EWS) DB.

FIG. 1

**LEVEL 1**
MILESTONE SCHEDULE

PROJECT MILESTONE SCHEDULE

**LEVEL 2**
SUMMARY SCHEDULE

ENGIN-EERING / PRO-CUREMENT / CON-STRUCTION / START-UP

**LEVEL 3**
INTEGRATED PROJECT SCHEDULE

ENGINEERING AND PROCUREMENT CPM / CON-STRUCTION CPM / START-UP CPM

| EIPS_No | EIPS_No_Group |
|---|---|
| 93141P1911 | |
| 93141P1912 | 93141P191 |
| 93141P1913 | |
| 93141P1914 | |
| 93142P1911 | |
| 93142P1912 | 93142P191 |
| 93142P1913 | |
| 93142P1914 | |

**LEVEL 4**
WORKING SCHEDULE

ENGINEERING WORKING SCHEDULE / PROCUREMENT WORKING SCHEDULE / CONSTRUCTION WORKING SCHEDULE / START-UP WORKING SCHEDULE

| EWS_No | ECOA_No |
|---|---|
| 9-314-P191-010 | |
| 9-314-P191-020 | 341P1191 |
| 9-314-P191-030 | |
| 9-314-P191-040 | |

## FIG. 2A

| No. | ECOA | DESCRIPTION | BUDGET | WVAL | REMARKS |
|---|---|---|---|---|---|
| 1 | | | | | |
| 2 | 031A0506 | ADMIN/SUPERVISION (GS) | 11.500 | 19.740 | |
| 3 | | | | | |
| 4 | | SUBTOTAL | 11.500 | 19.740 | |
| 5 | | | | | |
| 6 | | | | | |
| 7 | 030A1100 | DRAWINGS AS-BUILT (A1) | 2.500 | 4.291 | |
| 8 | 202A1101 | SITE PLOT PLAN | 920 | 1.579 | |
| 9 | 200A1108 | ANCILLARY BLDG STRUCT GENERAL DESIGN BASE | 700 | 1.202 | |
| 10 | 300A1108 | POWER BLOCK STRUCT GENERAL DESIGN BASE | 1.730 | 2.970 | |
| 11 | 200A1112 | ANCILLARY BLDG & STRUCT PLAN | 1.480 | 2.540 | |
| 12 | 330A1112 | CPB GENERAL PLAN | 4.000 | 6.866 | |
| 13 | 200A1113 | ANCILLARY BLDG & STRUCT EXTERIOR ELEVATION | 480 | 0.824 | |
| 14 | 330A1113 | CPB GENERAL ELEVATION | 1.840 | 3.158 | |
| 15 | 200A1114 | ANCILLARY BLDG & STRUCT OPENING/PENETRATION SEAL SCHEDULE | 800 | 1.373 | |
| 16 | 300A1114 | POWER BLOCK STRUCT GENERAL OPENING/PENETRATION SEAL SCHEDULE | 2.000 | 3.433 | |
| 17 | 200A1115 | ANCILLARY BLDG SECTION/DETAIL | 470 | 0.807 | |
| 18 | 330A1115 | CPB GENERAL SECTION/DETAIL | 1.020 | 1.751 | |

EP 3 671 592 A1

# FIG. 2B

**ENGINEERING WORKING SCHEDULE**
- Drawings -
(Sorted By FBS/PBS/SEQ/UNIT)

Shin-Kori Nuclear Power Plant
Units 5 & 6
J : I & C

| EWS No. Group/ Acc. No. Rev. No./ Rev. Date | Description | | Start Drawing CP#1 | Inter'l Comment CP#2 | Prelim. Issue CP#3 | (None) CP#4 | Mat'l/Fab Issue | V.data/ Dsn Frz CP#6 | Constr. Issue CP#7 | Final Issue CP#8 | Remarks |
|---|---|---|---|---|---|---|---|---|---|---|---|
| 9-431-J168-101 | INFORMATION DISPLAY FOR RC RCS:REACTOR COOLANT SYSTEM(RC) | S: | 12/08/28 | 13/06/30 | 13/08/30 | | | 15/04/05 | 15/06/05 | 16/05/08 | |
| J1 / 430J1168 | | F: | | | | | | | | | |
| 01 / 16/09/01 | | A: | 12/04/27 | 13/04/12 | 13/08/30 | | | 15/04/30 | 15/09/01 | 16/09/30 | |
| 9-431-J168-102 | INFORMATION DISPLAY FOR RC PZR/RG: POSRV&RG(RC/RG) | S: | 12/08/28 | 13/06/30 | 13/08/30 | | | 15/04/05 | 15/06/05 | 16/05/08 | |
| J1 / 430J1168 | | F: | | | | | | | | | |
| 01 / 16/09/01 | | A: | 12/04/27 | 13/04/12 | 13/08/30 | | | 15/04/30 | 15/09/01 | 16/09/30 | |
| 9-431-J168-103 | INFORMATION DISPLAY FOR RC RCP 1A: REACTOR COOLANT PUMP 1A(RC) | S: | 12/08/28 | 13/06/30 | 13/08/30 | | | 15/04/05 | 15/06/05 | 16/05/08 | |
| J1 / 430J1168 | | F: | | | | | | | | | |
| 02 / 18/05/03 | | A: | 12/04/27 | 13/04/12 | 13/08/30 | | | 15/04/30 | 15/09/01 | 16/09/30 | |
| 9-431-J168-104 | INFORMATION DISPLAY FOR RC RCP 1B: REACTOR COOLANT PUMP 1B(RC) | S: | 12/08/28 | 13/06/30 | 13/08/30 | | | 15/04/05 | 15/06/05 | 16/05/08 | |
| J1 / 430J1168 | | F: | | | | | | | | | |
| 02 / 18/05/03 | | A: | 12/04/27 | 13/04/12 | 13/08/30 | | | 15/04/30 | 15/09/01 | 16/09/30 | |
| 9-431-J168-105 | INFORMATION DISPLAY FOR RC RCP 2A: REACTOR COOLANT PUMP 2A(RC) | S: | 12/08/28 | 13/06/30 | 13/08/30 | | | 15/04/05 | 15/06/05 | 16/05/08 | |
| J1 / 430J1168 | | F: | | | | | | | | | |
| 02 / 18/05/03 | | A: | 12/04/27 | 13/04/12 | 13/08/30 | | | 15/04/30 | 15/09/01 | 16/09/30 | |
| 9-431-J168-106 | INFORMATION DISPLAY FOR RC RCP 2B: REACTOR COOLANT PUMP 2B(RC) | S: | 12/08/28 | 13/06/30 | 13/08/30 | | | 15/04/05 | 15/06/05 | 16/05/08 | |
| J1 / 430J1168 | | F: | | | | | | | | | |
| 02 / 18/05/03 | | A: | 12/04/27 | 13/04/12 | 13/08/30 | | | 15/04/30 | 15/09/01 | 16/09/30 | |

EP 3 671 592 A1

## FIG. 2C

| FBS | | 168, MMI Display Drawing | | | |
|---|---|---|---|---|---|
| CP | | % Complete (Earned Value) for Payment | Description | Definition | Remarks |
| PI | 1 | 5 | Start DWG | · Obtain all necessary information (P&ID) <br> · Ready to draft | |
| PI | 2 | 10 | Internal Comment Issue | · Incorporate basic data and information <br> · Ready to use for interdiscipline review | |
| | 3 | 10 | Preliminary Issue | · Interdiscipline comments resolved (Rev.A) | |
| CI | 4 | N/A | Material Issue | N/A | |
| CI | 5 | N/A | Fabrication Issue | N/A | |
| | 6 | 15 | Design Freeze/ Incorp. Vendor Data | · Incorporate vendor data and information <br> · Issued for interdiscipline comments | |
| | 7 | 25 | Constructuon Issue | · Incorporate final data and comments made by on and off project reviewer and client (Rev.0) | |
| FI | 8 | 35 | Final Issue | · All holds are removed if CI was issued with holds <br> · If CI was issued without holds, FI can be credited using the FI schedule date in EWS | |

EP 3 671 592 A1

# FIG. 3

# FIG. 4

DESIGN

CONSTRUCTION | CIVIL/STRUCTURAL | LECTRIC | NUCLEAR | ....

DRAWINGS | SPECIFICATIONS | CALCULATION | REPORT | TASK (LOE)

LEVEL 3

93141P191

93141P1911 PI-RCB LEVEL4 ... | 93141P1912 CI-RCB LEVEL4 ... | 93141P1913 FI-RCB LEVEL4 ... | 93141P1914 As Built-RCB LEVEL4 ...

93142P191

93142P1911 PI-RCB LEVEL4 ... | 93142P1912 CI-RCB LEVEL4 ... | 93142P1913 FI-RCB LEVEL4 ... | 93142P1914 As Built-RCB LEVEL4 ...

314P1191

LEVEL 4

| EWS_No | ECOA_No | EIPS_No_Group | | CP1 | CP2 | CP3 | CP4 | CP5 | CP6 | CP7 | CP8 | CP9 | CP10 | CP11 |
|---|---|---|---|---|---|---|---|---|---|---|---|---|---|---|
| 9-314-P191-010 | 314P1191 | 93141P191 | PLAN | 2011-05-19 | | 2011-10-26 | | | | 2012-12-18 | 2013-08-07 | | | 2017-01-23 |
| | | | PERFORMANCE | 2011-05-19 | | 2011-10-21 | | | | 2012-12-21 | 2013-08-21 | | | 2016-12-27 |
| 9-314-P191-020 | 314P1191 | 93141P191 | PLAN | 2011-05-19 | | 2011-10-26 | | | | 2012-12-18 | 2013-08-07 | | | 2017-01-23 |
| | | | PERFORMANCE | 2011-05-19 | | 2011-10-21 | | | | 2012-12-21 | 2013-08-21 | | | 2016-12-27 |
| 9-314-P191-030 | 314P1191 | 93142P191 | PLAN | 2011-06-15 | | 2011-11-25 | | | | 2013-01-17 | 2013-09-09 | | | 2017-01-23 |
| | | | PERFORMANCE | 2011-06-15 | | 2011-10-21 | | | | 2012-12-21 | 2013-08-21 | | | 2016-12-27 |
| 9-314-P191-040 | 314P1191 | 93142P191 | PLAN | 2011-06-15 | | 2011-11-25 | | | | 2013-01-17 | 2013-09-09 | | | 2017-01-23 |
| | | | PERFORMANCE | 2011-06-15 | | 2011-10-21 | | | | 2012-12-21 | 2013-08-21 | | | 2016-12-27 |

EP 3 671 592 A1

# FIG. 5

**LEVEL 4 ASSOCIATION UNIT** 110

**MAPPING ASSOCIATION UNIT** 120

**LEVEL 3 ASSOCIATION UNIT** 130

100

PROGRESS RATE ROLL-UP START

ST

**Input DB**
- EIPS_No_Group

S2

**EIPS DB**
- EIPS_No
- EIPS_No_Group

S2

**BEME DB**
- ECOA_No
- ECOA_WV
- MH

S1

**EWS DB**
- EWS_No
- ECOA_No
- FBS
- EIPS_No_Group

S3

**Mapping DB**
- EIPS_No_Group
- ECOA_No
- ECOA_WV
- ECOA_qty
- EIPS_No_Group_qty

S4

**EIPS_No_Group_MH DB**
- EIPS_No_Group
- EIPS_No_Group_WV

S6

S5

**CPVAL DB**
- FBS
- CPVAL

**EIPS_No_MH DB**
- EIPS_No
- EIPS_No_Group
- FBS
- CPVAL
- EIPS_No_WV

S7

RP

LEVEL 3 PROGRESS RATE REPORT GENERATION

EP 3 671 592 A1

## FIG. 6A

| BEME DB | | |
|---|---|---|
| ECOA_No | ECOA_WV | MH |
| 314P1191 | 0.587 | 135 |

## FIG. 6B

| EWS DB | | | |
|---|---|---|---|
| EWS_No | ECOA_No | FBS | EIPS_No_Group |
| 9-314-P191-010 | 314P1191 | 191 | 93141P191 |
| 9-314-P191-020 | 314P1191 | 191 | 93141P191 |
| 9-314-P191-030 | 314P1191 | 191 | 93142P191 |
| 9-314-P191-040 | 314P1191 | 191 | 93142P191 |

## FIG. 6C

| Mapping DB | | | | |
|---|---|---|---|---|
| EIPS_No_Group | ECOA_No | ECOA_WV | ECOA_qty | EIPS_No_Group_qty |
| 93141P191 | 314P1191 | 0.587 | 4 | 2 |
| 93142P191 | 314P1191 | 0.587 | 4 | 2 |

## FIG. 6D

| CPVAL DB | | | | |
|---|---|---|---|---|
| FBS | PI | CI | FI | AB |
| 191 | 35% | 35% | 20% | 10% |

## FIG. 6E

| EIPS DB | |
|---|---|
| EIPS_No | EIPS_No_Group |
| 93141P191 | 93141P191 |
| 93141P192 | 93141P191 |
| 93141P193 | 93141P191 |
| 93141P194 | 93141P191 |
| 93142P191 | 93142P191 |
| 93142P192 | 93142P191 |
| 93142P193 | 93142P191 |
| 93142P194 | 93142P191 |

## FIG. 6F

| EIPS_No_Group_MH DB | |
|---|---|
| EIPS_No_Group | EIPS_No_Group_WV |
| 93141P191 | 0.2935 |
| 93142P191 | 0.2935 |

## FIG. 6G

| EIPS_No_MH DB | | | | |
|---|---|---|---|---|
| EIPS_No | EIPS_No_Group | FBS | CPVAL | EIPS_No_WV |
| 93141P1911 | 93141P191 | 191 | 35% | 0.1027 |
| 93141P1912 | 93141P191 | 191 | 35% | 0.1027 |
| 93141P1913 | 93141P191 | 191 | 20% | 0.0587 |
| 93141P1914 | 93141P191 | 191 | 10% | 0.0294 |
| 93142P1911 | 93142P191 | 191 | 35% | 0.1027 |
| 93142P1912 | 93142P191 | 191 | 35% | 0.1027 |
| 93142P1913 | 93142P191 | 191 | 20% | 0.0587 |
| 93142P1914 | 93142P191 | 191 | 10% | 0.0294 |

## FIG. 7A

| EWS_No | ECOA_No | EIPS_No_Group | | CP1 | CP2 | CP3 | CP4 | CP5 | CP6 | CP7 | CP8 | CP9 | CP10 | CP11 |
|---|---|---|---|---|---|---|---|---|---|---|---|---|---|---|
| 9-314-P191-010 | 314P1191 | 93141P191 | PLANNED | 2011-05-19 | | 2011-10-26 | | | | 2012-12-18 | 2013-08-07 | | | 2017-01-23 |
| | | | ACTUAL | 2011-05-19 | | 2011-10-21 | | | | 2012-12-21 | 2013-08-21 | | | 2016-12-27 |
| 9-314-P191-020 | 314P1191 | 93141P191 | PLANNED | 2011-05-19 | | 2011-10-26 | | | | 2012-12-18 | 2013-08-07 | | | 2017-01-23 |
| | | | ACTUAL | 2011-05-19 | | 2011-10-21 | | | | 2012-12-21 | 2013-08-21 | | | 2016-12-27 |
| 9-314-P191-030 | 314P1191 | 93142P191 | PLANNED | 2011-06-15 | | 2011-11-25 | | | | 2013-01-17 | 2013-09-09 | | | 2017-01-23 |
| | | | ACTUAL | 2011-06-15 | | 2011-10-21 | | | | 2012-12-21 | 2013-08-21 | | | 2016-12-27 |
| 9-314-P191-040 | 314P1191 | 93142P191 | PLANNED | 2011-06-15 | | 2011-11-25 | | | | 2013-01-17 | 2013-09-09 | | | 2017-01-23 |
| | | | ACTUAL | 2011-06-15 | | 2011-10-21 | | | | 2012-12-21 | 2013-08-21 | | | 2016-12-27 |

## FIG. 7B

| EIPS_No_Group | ECOA_No | ECOA_WV | ECOA_qty | EIPS_No_Group_qty | EIPS_No_Group_WV |
|---|---|---|---|---|---|
| 93141P191 | 314P1191 | 0.587 | 4 | 2 | 0.2935 |
| 93142P191 | 314P1191 | 0.587 | 4 | 2 | 0.2935 |

## FIG. 7C

EP 3 671 592 A1

| EWS_No | ECOA_No | ECOA_No_Group | FBS | CP(Control Point) | | | | |
|---|---|---|---|---|---|---|---|---|
| | | | | CP1 | CP3(PI) | CP7(CI) | CP8(FI) | CP11(AB) |
| 9-314-P191-010 | 314P1191 | 93141P191 | 191 | 2011-05-19 | 2011-10-26 | 2012-12-18 | 2013-08-07 | 2017-01-23 |
| 9-314-P191-020 | 314P1191 | 93141P191 | 191 | 2011-05-19 | 2011-10-26 | 2012-12-18 | 2013-08-07 | 2017-01-23 |
| EIPS_No | | | | | 93141P1911 | 93141P1912 | 93141P1913 | 93141P1914 |
| 9-314-P191-030 | 314P1191 | 93142P191 | 191 | 2011-06-15 | 2011-11-25 | 2013-01-17 | 2013-09-09 | 2017-01-23 |
| 9-314-P191-040 | 314P1191 | 93142P191 | 191 | 2011-06-15 | 2011-11-25 | 2013-01-17 | 2013-09-09 | 2017-01-23 |
| EIPS_No | | | | | 93142P1911 | 93142P1912 | 93142P1913 | 93142P1914 |
| CPVAL (FBS: 161) | | | | | 35% | 35% | 20% | 10% |

## FIG. 7D

| EIPS_No_Group | EIPS_No | FBS | CP1~ CP2 | CP3 | CP4~ CP6 | CP7 | CP8 | CP9~ CP10 | CP11 | EIPS_No_ Group_WV | CPVAL | EIPS_No_ WV | Phase |
|---|---|---|---|---|---|---|---|---|---|---|---|---|---|
| 93141P191 | 93141P1911 | 191 | 0 | 35 | 0 | 0 | 0 | 0 | 0 | 0.2935 | 35% | 0.1027 | PI |
| 93141P191 | 93141P1912 | 191 | 0 | 0 | 0 | 35 | 0 | 0 | 0 | 0.2935 | 35% | 0.1027 | CI |
| 93141P191 | 93141P1913 | 191 | 0 | 0 | 0 | 0 | 20 | 0 | 0 | 0.2935 | 20% | 0.0587 | FI |
| 93141P191 | 93141P1914 | 191 | 0 | 0 | 0 | 0 | 0 | 0 | 10 | 0.2935 | 10% | 0.0294 | AB |
| 93142P191 | 93142P1911 | 191 | 0 | 35 | 0 | 0 | 0 | 0 | 0 | 0.2935 | 35% | 0.1027 | PI |
| 93142P191 | 93142P1912 | 191 | 0 | 0 | 0 | 35 | 0 | 0 | 0 | 0.2935 | 35% | 0.1027 | CI |
| 93142P191 | 93142P1913 | 191 | 0 | 0 | 0 | 0 | 20 | 0 | 0 | 0.2935 | 20% | 0.0587 | FI |
| 93142P191 | 93142P1914 | 191 | 0 | 0 | 0 | 0 | 0 | 0 | 10 | 0.2935 | 10% | 0.0294 | AB |

## FIG. 8A

| LEVEL 4 PROGRESS RATE REPORT |
|---|

**EWS PAYMENT PROGRESS REPORT**
**by Account (0 ~ 100 %)**

| P ECOA_No | PLANT DESIGN Description | | TOT Q'TY | CP1 | CP2 | CP3 | CP4 | CP5 | CP6 | CP7 | CP8 | CP9 | CP10 | CP11 | WEIGHT VALUE | KOP (SCH, ACT) % | W.V * (SCH, ACT) %/100 |
|---|---|---|---|---|---|---|---|---|---|---|---|---|---|---|---|---|---|
| 312P1191 | RCB EL. 100'-0" LB PIPING DESIGN DWG | Sch. | 4 | 4 | 4 | 4 | 0 | 0 | 4 | 4 | 4 | 0 | 0 | 4 | .587 | 100.000 | .587 |
| | | Act. | | 4 | 4 | 4 | 0 | 0 | 4 | 4 | 4 | 0 | 0 | 4 | | 100.000 | .587 |
| 312P1193 | RCB EL.100'-0" LB ISO DWG | Sch. | 38 | 38 | 38 | 0 | 0 | 38 | 38 | 38 | 38 | 0 | 0 | 38 | 22.895 | 100.000 | 22.895 |
| | | Act. | | 38 | 38 | 0 | 0 | 38 | 38 | 38 | 38 | 0 | 0 | 38 | | 100.000 | 22.895 |
| 312P1194 | RCB EL.100'-0" PLUMBING DWG | Sch. | 1 | 1 | 1 | 1 | 0 | 0 | 1 | 1 | 1 | 0 | 0 | 1 | .652 | 100.000 | .652 |
| | | Act. | | 1 | 1 | 1 | 0 | 0 | 1 | 1 | 1 | 0 | 0 | 1 | | 100.000 | .652 |
| 313P1191 | RCB EL. 114'-0" LB PIPING DESIGN DWG | Sch. | 4 | 4 | 4 | 4 | 0 | 0 | 4 | 4 | 4 | 0 | 0 | 4 | .587 | 100.000 | .587 |
| | | Act. | | 4 | 4 | 4 | 0 | 0 | 4 | 4 | 4 | 0 | 0 | 4 | | 100.000 | .587 |
| 313P1193 | RCB EL.114'-0" LB ISO DWG | Sch. | 62 | 62 | 62 | 0 | 0 | 62 | 62 | 62 | 62 | 0 | 0 | 62 | 28.114 | 100.000 | 28.114 |
| | | Act. | | 62 | 62 | 0 | 0 | 62 | 62 | 62 | 62 | 0 | 0 | 62 | | 100.000 | 28.114 |
| 313P1194 | RCB EL.114'-0" PLUMBING DWG | Sch. | 1 | 1 | 1 | 1 | 0 | 0 | 1 | 1 | 1 | 0 | 0 | 1 | .652 | 100.000 | .652 |
| | | Act. | | 1 | 1 | 1 | 0 | 0 | 1 | 1 | 1 | 0 | 0 | 1 | | 100.000 | .652 |
| 314P1191 | RCB EL. 136'-6" LB PIPING DESIGN DWG | Sch. | 4 | 4 | 4 | 4 | 0 | 0 | 4 | 4 | 4 | 0 | 0 | 4 | .587 | 100.000 | .587 |
| | | Act. | | 4 | 4 | 4 | 0 | 0 | 4 | 4 | 4 | 0 | 0 | 4 | | 100.000 | .587 |

# FIG. 8B

LEVEL 3 PROGRESS RATE REPORT

**TOTAL PAYMENT PROGRESS REPORT**
**by ACTIVITY (0 ~ 100%)**

P : PLANT DESIGN

| EIPS_No | Description | | Tot Q'ty | Q'ty (SCH,ACT) | Weight Value | KEP E&C (SCH,ACT)% | W.V x (SCH,ACT)%/100 |
|---|---|---|---|---|---|---|---|
| 93141P1911 | PI-RCB LEVEL 4 PIPING DESIGN DWGS | Sch. | 2 | 2 | 0.1027 | 100 | 0.1027 |
| | | Act. | | 2 | | 100 | 0.1027 |
| 93141P1912 | CI-RCB LEVEL 4 PIPING DESIGN DWGS | Sch. | 2 | 2 | 0.1027 | 100 | 0.1027 |
| | | Act. | | 2 | | 100 | 0.1027 |
| 93141P1913 | FI-RCB LEVEL 4 PIPING DESIGN DWGS | Sch. | 2 | 2 | 0.0587 | 100 | 0.0587 |
| | | Act. | | 2 | | 100 | 0.0587 |
| 93141P1914 | As-Built-RCB LEVEL 4 PIPING DESIGN DWGS | Sch. | 2 | 2 | 0.0294 | 100 | 0.0294 |
| | | Act. | | 2 | | 100 | 0.0294 |
| 93142P1911 | PI-RCB LEVEL 4 PIPING DESIGN DWGS | Sch. | 2 | 2 | 0.1027 | 100 | 0.1027 |
| | | Act. | | 2 | | 100 | 0.1027 |
| 93142P1912 | CI-RCB LEVEL 4 PIPING DESIGN DWGS | Sch. | 2 | 2 | 0.1027 | 100 | 0.1027 |
| | | Act. | | 2 | | 100 | 0.1027 |
| 93142P1913 | FI-RCB LEVEL 4 PIPING DESIGN DWGS | Sch. | 2 | 2 | 0.0587 | 100 | 0.0587 |
| | | Act. | | 2 | | 100 | 0.0587 |
| 93142P1914 | As-Built-RCB LEVEL 4 PIPING DESIGN DWGS | Sch. | 2 | 2 | 0.0294 | 100 | 0.0294 |
| | | Act. | | 2 | | 100 | 0.0294 |
| GRAND TOTAL | | Sch. | | | 0.5870 | 100.0000 | 0.5870 |
| | | Act. | | | | 100.0000 | 0.5870 |

Europäisches Patentamt

European Patent Office

Office européen des brevets

## EUROPEAN SEARCH REPORT

**Application Number**

EP 19 21 5715

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 103 136 636 A (CHINA NUCLEAR POWER ENG CO LTD; CHINA GUANGDONG NUCLEAR POWER) 5 June 2013 (2013-06-05) * paragraphs [0063] - [0143] * ----- | 1-12 | INV. G06Q10/06 G06Q50/08 |
| X | KR 2016 0081247 A (HYUNDAI ENG & CONSTRUCT CO LTD [KR]) 8 July 2016 (2016-07-08) * paragraphs [0017] - [0034] * ----- | 1-12 | |
| X | US 2014/229212 A1 (MACELHERON SANDY [CA] ET AL) 14 August 2014 (2014-08-14) * abstract; figures 1-5 * * paragraphs [0009] - [0030] * * paragraphs [0044] - [0068] * ----- | 1-12 | |

TECHNICAL FIELDS SEARCHED (IPC)

G06Q

The present search report has been drawn up for all claims

| Place of search | Date of completion of the search | Examiner |
|---|---|---|
| Munich | 19 March 2020 | Mülthaler, Evelyn |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 21 5715

This annex lists the patent family members relating to the patent documents cited in the above-mentioned European search report.
The members are as contained in the European Patent Office EDP file on
The European Patent Office is in no way liable for these particulars which are merely given for the purpose of information.

19-03-2020

| Patent document cited in search report | | Publication date | Patent family member(s) | | Publication date |
|---|---|---|---|---|---|
| CN 103136636 | A | 05-06-2013 | NONE | | |
| KR 20160081247 | A | 08-07-2016 | NONE | | |
| US 2014229212 | A1 | 14-08-2014 | AU | 2012313296 A1 | 02-05-2013 |
| | | | AU | 2016204982 A1 | 04-08-2016 |
| | | | CA | 2808449 A1 | 11-03-2013 |
| | | | US | 2014229212 A1 | 14-08-2014 |
| | | | WO | 2013040682 A1 | 28-03-2013 |

EPO FORM P0459

For more details about this annex : see Official Journal of the European Patent Office, No. 12/82

**REFERENCES CITED IN THE DESCRIPTION**

**Patent documents cited in the description**

- KR 1020180165468

- KR 1020190029373